(19) **Europäisches Patentamt / European Patent Office / Office européen des brevets**

(11) **EP 4 710 774 A1**

(12) **EUROPEAN PATENT APPLICATION**
published in accordance with Art. 153(4) EPC

(43) Date of publication:
**18.03.2026  Bulletin 2026/12**

(21) Application number: **24803523.0**

(22) Date of filing: **09.05.2024**

(51) International Patent Classification (IPC):
**A23L 27/60** (2016.01)        **A23L 27/00** (2016.01)

(52) Cooperative Patent Classification (CPC):
**A23L 27/00; A23L 27/60**

(86) International application number:
**PCT/JP2024/017277**

(87) International publication number:
**WO 2024/232414 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **10.05.2023  JP 2023078179**
          **10.05.2023  JP 2023078182**

(71) Applicant: **Kewpie Corporation**
**Tokyo 150-0002 (JP)**

(72) Inventors:
• **KOBAYASHI Hideaki**
  **Chofu-shi, Tokyo 182-0002 (JP)**
• **MATSUDA Hajime**
  **Chofu-shi, Tokyo 182-0002 (JP)**

• **YABUTA Hiroyuki**
  **Chofu-shi, Tokyo 182-0002 (JP)**
• **NISHIDA Takefumi**
  **Chofu-shi, Tokyo 182-0002 (JP)**
• **IWAMI Riho**
  **Chofu-shi, Tokyo 182-0002 (JP)**
• **OMORI Mai**
  **Chofu-shi, Tokyo 182-0002 (JP)**
• **TANAKA Tomoaki**
  **Chofu-shi, Tokyo 182-0002 (JP)**
• **ISOBE Megumi**
  **Chofu-shi, Tokyo 182-0002 (JP)**
• **SAWADA Mami**
  **Chofu-shi, Tokyo 182-0002 (JP)**

(74) Representative: **Valea AB**
  **Box 1098**
  **405 23 Göteborg (SE)**

(54) **ACIDIC LIQUID SEASONING, METHOD FOR PREVENTING OXIDATION OF ACIDIC LIQUID SEASONING, ANTIOXIDANT, METHOD FOR REDUCING SOURNESS, AND SOURNESS REDUCING AGENT**

(57)    [Problem to be solved] An object of the present invention is to provide an acidic liquid seasoning in which the generation of an oxidized odor derived from a fat or oil can be reduced even after a long-term storage, without using any artificial food additive.

[Solution to problem] The acidic liquid seasoning according to the present invention is an acidic liquid seasoning containing at least acetic acid, an edible fat or oil, and water, wherein the content of the edible fat or oil is 10% by mass or more and 90% by mass or less with respect to the entire amount of the acidic liquid seasoning, wherein the content of the acetic acid is 0.1% by mass or more and 5.0% by mass or less with respect to the entire amount of the acidic liquid seasoning, and wherein the acidic liquid seasoning further contains a water-soluble fermented soybean polysaccharide having a molecular weight of $3 \times 10^3$ or more and $10 \times 10^4$ or less.

**Description**

BACKGROUND OF THE INVENTION

Field of the Invention

The present invention relates to an acidic liquid seasoning. More particularly, the present invention relates to an acidic liquid seasoning containing at least acetic acid, an edible fat or oil, and water. Further, the present invention also relates to an oxidation prevention method, an antioxidant, an acidity reduction method, and an acidity reducer for an acidic liquid seasoning.

Background Art

In acidic liquid seasonings, changes in the flavor, degeneration and/or discoloration may occur as a result of the oxidation of components contained in the seasonings during storage. In particular, those containing edible fats and oils have a problem that strong oxidized odors derived from the fats and oils are perceived. Therefore, the addition of an artificial food additive such as, for example, calcium disodium ethylendiaminetetraacetate (EDTA·Ca2Na) has been done in order to prevent the oxidation of fats and oils.
In recent years, however, the effects of chemical substances used as food additives on the body have become an issue. Further, consumers tend to avoid the use of artificial food additives in recent years. Therefore, it is required to avoid the use of chemical substances in food as much as possible. To address such a technical problem, a technique has been proposed in which an egg white hydrolysate obtained by hydrolyzing egg white using a protease is incorporated into an acidic oil-in-water type emulsified food, to reduce the progression of oxidation and changes in the flavor (see Patent Document 1). However, an acidic liquid seasoning has still been required in which the generation of an oxidized odor derived from a fat or oil can be reduced even after a long-term storage, without using an artificial food additive such as calcium disodium ethylendiaminetetraacetate.

Citation List

PATENT DOCUMENT

Patent Document 1: JP 2006-187277 A

SUMMARY OF THE INVENTION

Technical Problem

Accordingly, an object of the present invention is to provide an acidic liquid seasoning in which the generation of an oxidized odor derived from a fat or oil can be reduced even after a long-term storage, without using an artificial food additive such as calcium disodium ethylendiaminetetraacetate.

Solution to Problem

As a result of intensive studies to the solve the above-mentioned problem, the present inventors have found out, surprisingly, that it is possible to obtain an acidic liquid seasoning in which the generation of an oxidized odor derived from a fat or oil after a long-term storage can be reduced, and in which the acidity derived from acetic acid can be masked, by incorporating a specific water-soluble fermented soybean polysaccharide to an acidic liquid seasoning containing at least acetic acid, an edible fat or oil and water. The present inventors have completed the present invention based on such a finding.
Specifically, the present invention provides the following inventions.

[1] An acidic liquid seasoning containing at least acetic acid, an edible fat or oil, and water,

wherein the content of the edible fat or oil is 10% by mass or more and 90% by mass or less with respect to the entire amount of the acidic liquid seasoning,
wherein the content of the acetic acid is 0.1% by mass or more and 5.0% by mass or less with respect to the entire amount of the acidic liquid seasoning, and
wherein the acidic liquid seasoning further contains a water-soluble fermented soybean polysaccharide having a molecular weight of $3 \times 10^3$ or more and $10 \times 10^4$ or less.

[2] The acidic liquid seasoning according to [1], wherein the content of the water-soluble fermented soybean polysaccharide is 0.001 parts by mass or more with respect to 100 parts by mass of the content of the edible fat or oil.

[3] The acidic liquid seasoning according to [1] or [2], wherein the content of the water-soluble fermented soybean polysaccharide is 0.001% by mass or more and 1.0% by mass or less with respect to the entire amount of the acidic liquid seasoning.

[4] The acidic liquid seasoning according to any one of [1] to [3], wherein the water-soluble fermented soybean polysaccharide is a water-soluble koji-fermented soybean polysaccharide.

[5] The acidic liquid seasoning according to any one of [1] to [4], wherein the content of soy sauce in the acidic liquid seasoning is 20% by mass or less with respect to the entire amount of the acidic liquid seasoning.

[6] The acidic liquid seasoning according to any one of [1] to [4], wherein the content of soy sauce in the acidic liquid seasoning is 1.0% by mass or less with respect to the entire amount of the acidic liquid seasoning.

[7] The acidic liquid seasoning according to any one of [1] to [4], wherein the acidic liquid seasoning does not contain soy sauce.

[8] The acidic liquid seasoning according to any one of [1] to [7], wherein the antioxidant activity of the water-soluble fermented soybean polysaccharide, as evaluated by a test method based on a model system for the oxidation of an acidic egg yolk solution, which is defined in the present specification, is 110 or more with respect to that of a non-addition control taken as 100.

[9] The acidic liquid seasoning according to any one of [1] to [8], further containing an emulsifier which is at least one selected from the group consisting of egg yolk, a modified starch and a vegetable protein, and/or a thickener.

[10] The acidic liquid seasoning according to [9], wherein the content of the egg yolk in terms of raw egg yolk is 0.5% by mass or more with respect to the entire amount of the acidic liquid seasoning.

[11] The acidic liquid seasoning according to any one of [1] to [10], wherein the acidic liquid seasoning has a pH of 2.0 or more and 4.5 or less.

[12] The acidic liquid seasoning according to any one of [1] to [11], wherein the acidic liquid seasoning is a mayonnaise-like seasoning.

[13] A food containing the acidic liquid seasoning according to any one of [1] to [12].

[14] A method of preventing the oxidation of an acidic liquid seasoning,
the method including adding a water-soluble fermented soybean polysaccharide having a molecular weight of $3 \times 10^3$ or more and $10 \times 10^4$ or less, to the acidic liquid seasoning.

[15] The method of preventing the oxidation of an acidic liquid seasoning according to [14], wherein the water-soluble fermented soybean polysaccharide is a water-soluble koji-fermented soybean polysaccharide.

[16] The method of preventing the oxidation of an acidic liquid seasoning according to [14] or [15], wherein the content of soy sauce in the acidic liquid seasoning is 20% by mass or less with respect to the entire amount of the acidic liquid seasoning.

[17] The method of preventing the oxidation of an acidic liquid seasoning according to [14] or [15], wherein the content of soy sauce in the acidic liquid seasoning is 1.0% by mass or less with respect to the entire amount of the acidic liquid seasoning.

[18] The method of preventing the oxidation of an acidic liquid seasoning according to [14] or [15], wherein the acidic liquid seasoning does not contain soy sauce.

[19] The method of preventing the oxidation of an acidic liquid seasoning according to any one of [14] to [18], wherein the method includes using a water-soluble fermented soybean polysaccharide fractionated or separated from a food or a food raw material.

[20] An antioxidant for an acidic liquid seasoning, containing a water-soluble fermented soybean polysaccharide having a molecular weight of $3 \times 10^3$ or more and $10 \times 10^4$ or less, as an active ingredient.

[21] The antioxidant for an acidic liquid seasoning according to [20], wherein the water-soluble fermented soybean polysaccharide is a water-soluble koji-fermented soybean polysaccharide.

[22] A method of producing an antioxidant for an acidic liquid seasoning,

the method including the step of fractionating or separating a water-soluble fermented soybean polysaccharide from a food or a food raw material,
wherein the antioxidant for an acidic liquid seasoning contains a water-soluble fermented soybean polysaccharide having a molecular weight of $3 \times 10^3$ or more and $10 \times 10^4$ or less, as an active ingredient.

[23] A method of reducing the acidity of an acidic liquid seasoning,
the method including adding a water-soluble fermented soybean polysaccharide having a molecular weight of $3 \times 10^3$

or more and $10 \times 10^4$ or less, to the acidic liquid seasoning.

[24] An acidity reducer for an acidic liquid seasoning, containing a water-soluble fermented soybean polysaccharide having a molecular weight of $3 \times 10^3$ or more and $10 \times 10^4$ or less, as an active ingredient.

[25] A method of producing an acidic liquid seasoning containing at least acetic acid, an edible fat or oil, and water,

wherein the method includes:

using a water-soluble fermented soybean polysaccharide fractionated or separated from a food or a food raw material, and

adding a water-soluble fermented soybean polysaccharide having a molecular weight of $3 \times 10^3$ or more and $10 \times 10^4$ or less, to the acidic liquid seasoning, and

wherein the content of the edible fat or oil is 10% by mass or more and 90% by mass or less with respect to the entire amount of the acidic liquid seasoning, and

wherein the content of the acetic acid is 0.1% by mass or more and 5.0% by mass or less with respect to the entire amount of the acidic liquid seasoning.

[26] The method of producing the acidic liquid seasoning, according to [25], wherein the content of the water-soluble fermented soybean polysaccharide is 0.001 parts by mass or more with respect to 100 parts by mass of the content of the edible fat or oil.

[27] The method of producing the acidic liquid seasoning, according to [25] or [26], wherein the content of the water-soluble fermented soybean polysaccharide is 0.001% by mass or more and 1.0% by mass or less with respect to the entire amount of the acidic liquid seasoning.

[28] The method of producing the acidic liquid seasoning, according to any one of [25] to [27], wherein the water-soluble fermented soybean polysaccharide is a water-soluble koji-fermented soybean polysaccharide.

Effects of the Invention

According to the present invention, it is possible to provide an acidic liquid seasoning in which the generation of an oxidized odor derived from a fat or oil after a long-term storage can be reduced, and in which the acidity derived from acetic acid can be masked. Such an acidic liquid seasoning can stimulate the appetite of consumers, making it possible to expect a further expansion in the market of acidic liquid seasonings.

DETAILED DESCRIPTION OF THE INVENTION

<Acidic Liquid Seasoning>

The acidic liquid seasoning according to the present invention contains at least a specific amount of acetic acid, a specific amount of edible fat or oil and water. The acidic liquid seasoning contains a water-soluble fermented soybean polysaccharide, and may further contain an emulsifier, a thickener, any other raw material and/or the like. The acidic liquid seasoning may be in an emulsified state, or in a separated state. In cases where the acidic liquid seasoning is in an emulsified state, the acidic liquid seasoning may have a configuration of an oil-in-water type (O/W type) emulsion or a W/O/W type complex emulsion, and suitably has a configuration of an oil-in-water type (O/W type) emulsion. In cases where the acidic liquid seasoning is in an emulsified state, the acidic liquid seasoning is required to include an emulsified phase at least partially. The entirety of the acidic liquid seasoning may be in an emulsified state, or alternatively, the seasoning may be in a state where an oil phase is layered on top of the portion in an emulsified state.

The acidic liquid seasoning is suitably a mayonnaise-like seasoning, because the above-described effects can be more markedly observed. The mayonnaise-like seasoning may be, for example, a mayonnaise or a salad dressing. Among salad dressings, those having a viscosity of 30 Pa·s or more are referred to as semi-solid salad dressings, in the Food Labeling Standards. Of these, those using specified raw materials such as egg yolk and the like, and having a water content of 30% by mass or less and a fat or oil content of 65% by mass or more are mayonnaises. The definition of the mayonnaise-like seasoning in the present invention includes a group of similar products which have properties (for example, taste, appearance, main raw materials, etc.) similar to mayonnaises defined in the Food Labeling Standards, but which have a component composition that does not match the composition defined in the Food Labeling Standards.

The water content in the acidic liquid seasoning is not particularly limited, and can be set as appropriate, depending on the contents of other components. The water content in the acidic liquid seasoning is, for example, 5% by mass or more and 80% by mass or less. The lower limit value of the water content is preferably 8% by mass or more, and more preferably 10% by mass or more, and the upper limit value thereof is preferably 60% by mass or less, more preferably 50% by mass or less, and still more preferably 40% by mass or less. The water content in the present invention is not limited to the amount of water incorporated into the acidic liquid seasoning, and includes water derived from other raw materials.

The acidic liquid seasoning has, for example, a pH of 2.0 or more and 4.5 or less. The lower limit value of the pH is preferably 2.3 or more, and more preferably 2.5 or more, and the upper limit value thereof is preferably 4.3 or less, and more preferably 4.0 or less. These upper limit values and lower limit values of the pH can be combined arbitrarily. For example, the pH is preferably 2.3 or more and 4.3 or less, and more preferably 2.5 or more and 4.0 or less. When the pH of the acidic liquid seasoning is within the range described above, it is possible to improve the flavor of the acidic liquid seasoning while controlling the occurrence of microorganisms in the acidic liquid seasoning to increase preservability. The value of the pH of the acidic liquid seasoning is a value measured using a pH meter (a desktop pH meter F-72, manufactured by HORIBA, Ltd.) at a pressure of 1 atm and a product temperature of 20°C.

The viscosity at 25°C of the acidic liquid seasoning is not particularly limited, and is, for example, 50 mPa·s or more and 2,000 Pa·s or less. The lower limit value of the viscosity is preferably 1,000 mPa·s or more, and more preferably 3,000 mPa·s or more, and the upper limit value thereof is preferably 1,500 Pa·s or less, and more preferably 1,000 Pa·s or less. These upper limit values and lower limit values of the viscosity can be combined arbitrarily. For example, the viscosity is preferably 1,000 mPa·s or more and 1,500 Pa·s or less, and more preferably 3,000 mPa·s or more and 1,000 Pa·s or less. The flavor of the acidic liquid seasoning can be perceived more clearly, by imparting a viscosity within the numerical range described above to the acidic liquid seasoning.

The viscosity is measured by a method using a Type BH viscometer, and using: Rotor No. 1 when the viscosity is less than 1,000 mPa·s, Rotor No. 2 when the viscosity is 1,000 mPa·s or more and less than 4,000 mPa·s, Rotor No. 3 when the viscosity is 4,000 mPa·s or more and less than 10,000 mPa·s, Rotor No. 4 when the viscosity is 10,000 mPa·s or more and less than 20,000 mPa·s, and Rotor No. 5 when the viscosity is 20,000 mPa·s or more and less than 40,000 mPa·s, under the conditions of a product temperature of 25°C and a rotational speed of 10 rpm; and using: Rotor No. 4 when the viscosity is 40 Pa·s or more and less than 100 Pa·s, Rotor No. 5 when the viscosity is 100 Pa·s or more and less than 200 Pa·s, Rotor No. 6 when the viscosity is 200 Pa·s or more and less than 500 Pa·s, and Rotor No. 7 when the viscosity is 500 Pa·s or more, under the conditions of a product temperature of 25°C and a rotational speed of 2 rpm. The viscosity is a value calculated from the reading when the rotor has rotated for one minute after the start of the measurement.

(Acetic Acid)

The content of the acetic acid is 0.1% by mass or more and 5.0% by mass or less with respect to the entire amount of the acidic liquid seasoning. The lower limit value of the content of the acetic acid is preferably 0.2% by mass or more, and more preferably 0.3% by mass or more, and the upper limit value thereof is preferably 4.0% by mass or less, and more preferably 3.0% by mass or less. These upper limit values and lower limit values of the content of the acetic acid can be combined arbitrarily. For example, the content of the acetic acid is preferably 0.2% by mass or more and 4.0% by mass or less, and more preferably 0.3% by mass or more and 3.0% by mass or less. When the content of the acetic acid in the acidic liquid seasoning is within the range described above, it is possible to improve the flavor of the acidic liquid seasoning while controlling the occurrence of microorganisms in the acidic liquid seasoning to increase preservability.

(Edible Fat or Oil)

The edible fat or oil to be incorporated into the acidic liquid seasoning is not particularly limited, and it is possible to use a conventionally known edible fat or oil. Specific example of the edible fat or oil which can be used include: vegetable fats and oils such as rapeseed oil, soybean oil, corn oil, palm oil, cottonseed oil, sunflower oil, safflower oil, sesame oil, olive oil, linseed oil, rice oil, camellia oil, perilla sesame oil, grape seed oil, peanut oil, almond oil and avocado oil; fish oil, beef tallow, lard and chicken fat; and fats and oils obtained through a chemical or enzymatic treatment or the like, such as MCT (medium-chain triglycerides), diglycerides, hydrogenated oils and transesterified oils. Of these, it is preferred to use a vegetable fat or oil, and more preferred to use rapeseed oil, soybean oil, corn oil, or palm oil, or a mixed oil of any of these oils.

The content of the edible fat or oil is 10% by mass or more and 90% by mass or less with respect to the entire amount of the acidic liquid seasoning. The lower limit value of the content of the edible fat or oil is preferably 30% by mass or more, more preferably 40% by mass or more, and still more preferably 50% by mass or more, and the upper limit value thereof is preferably 85% by mass or less, and more preferably 80% by mass or less. These upper limit values and lower limit values of the content of the edible fat or oil can be combined arbitrarily. For example, the content of the edible fat or oil is preferably 30% by mass or more and 85% by mass or less, and more preferably 40% by mass or more and 80% by mass or less. When the content of the fat and oil in the acidic liquid seasoning is within the range described above, it is possible to sufficiently perceive a rich taste derived from the fat or oil.

(Water-soluble Fermented Soybean Polysaccharide)

In the present invention, the term "water-soluble fermented soybean polysaccharide" refers to a water-soluble polysaccharide contained in a fermentation degradation product of a soy component. The water-soluble fermented soybean polysaccharide may be, for example, a water-soluble polysaccharide obtained from a degradation product produced by the fermentation of soybean pectin derived from soybean and containing galacturonic acid as a main component, with microorganisms such as koji mold or with an enzyme.

In the present invention, a polysaccharide fractionated or separated from a food or a food raw material as the water-soluble fermented soybean polysaccharide may be added to the acidic liquid seasoning, or alternatively, the food or food raw material itself that contains the water-soluble fermented soybean polysaccharide may be added the seasoning.

Further, a commercially available product can be used as the food or food raw material that contains the water-soluble fermented soybean polysaccharide. The commercially available product may be, for example, "Fermented Soy Polysaccharide" (manufactured by Higashimaru Shoyu Co., Ltd.), "Fermented Soy Polysaccharide Powder H" (manufactured by Higashimaru Shoyu Co., Ltd.), or the like. One obtained by fractionating or separating a water-soluble fermented soybean polysaccharide contained in the commercially available product as described above may be added to the acidic liquid seasoning, or the commercially available product itself may be added the seasoning.

As the water-soluble fermented soybean polysaccharide, it is preferred to use one with a high xylose content (for example, a xylose content of 5% by mass or more, preferably 10% by mass or more and 30% by mass or less, per constituent sugar). Further, the water-soluble fermented soybean polysaccharide has the following molecular weight, and preferably has the following antioxidant activity.

(Molecular Weight)

The water-soluble fermented soybean polysaccharide has a molecular weight of $3 \times 10^3$ or more and $10 \times 10^4$ or less. The molecular weight of the water-soluble fermented soybean polysaccharide may be $4 \times 10^3$ or more, or $5 \times 10^3$ or more, and is preferably $5 \times 10^4$ or less, and more preferably $3 \times 10^4$ or less. When the molecular weight of the water-soluble fermented soybean polysaccharide is within the numerical range described above, it is possible to reduce the generation of an oxidized odor derived from the fat or oil, and to mask the acidity derived from acetic acid, even after a long-term storage.

The molecular weight of the water-soluble fermented soybean polysaccharide can be measured by high performance liquid chromatography (HPLC method) which is conventionally known.

(Antioxidant Activity)

The antioxidant activity of the water-soluble fermented soybean polysaccharide, as evaluated by a model system for the oxidation of an acidic egg yolk solution, is, for example, 110 or more with respect to that of a non-addition control taken as 100.

The antioxidant activity of the water-soluble fermented soybean polysaccharide is preferably 115 or more, and more preferably 125 or more. When the antioxidant activity of the water-soluble fermented soybean polysaccharide is equal to or more than the numerical value described above, it is possible to reduce the generation of an oxidized odor derived from the fat or oil after a long-term storage.

In the present invention, the "evaluation of antioxidant activity by a model system for the oxidation of an acidic egg yolk solution" is carried out in accordance with the method described in the literature by the present inventors, "H. Kobayashi et al., Egg white hydrolysate inhibits oxidation in mayonnaise and a model system, Bioscience, Biotechnology, and Biochemistry, 81:6, 1206 to 1215, (2017), DOI: 10.1080/09168451. 2017. 1290519". Specifically, the antioxidant activity of the water-soluble fermented soybean polysaccharide, as evaluated by the model system for the oxidation of an acidic egg yolk solution, is a value obtained by the following test method.

[Test Method Based on Model System for Oxidation of Acidic Egg Yolk Solution]

(1) A quantity of 10 g of egg yolk is diluted with 130 g of distilled water, and then heated at 60°C for 3 minutes, to obtain a diluted egg yolk solution. To the resulting diluted egg yolk solution, glacial acetic acid is added to adjust the pH to 4.0, thereby preparing an acidic egg yolk solution (containing 1% egg yolk solid content). Subsequently, a dispersion liquid obtained by dispersing a sample for evaluating the antioxidant activity in distilled water is added to the acidic egg yolk solution, and the resulting mixture is used as a test solution. At this time, the sample concentration in the dispersion liquid and the added amount thereof are adjusted such that the amount of sample in the test solution is 100 times the content of Fe contained in the acidic egg yolk solution (the following formula).

Formula: (amount of sample)/(Fe content in the acidic egg yolk solution) = 100 (w/w)

(2) A quantity of 10 mL of the test solution is introduced into a 15 mL test tube with a screw cap, and the test solution is incubated at 55°C for 65 hours in a dark place, in an air-circulating environment. A quantity of 200 $\mu$L of the incubated test solution is transferred into a test tube, 3 mL of an ether/ethanol (1:3, v/v) mixed solution is added thereto, and then stirred, followed by centrifugation at 1,200 $\times$ g for 5 minutes. The fluorescence intensity (Ex: 360 nm, Em: 440 nm) of the resulting supernatant is measured by a spectrophotometer.

(3) The value of relative fluorescence intensity, when the measured value of a solution obtained by diluting quinine sulfate with 0.1 N sulfuric acid to 1 $\mu$g/mL is taken as 100 is used as the fluorescence intensity. The antioxidant activity in the invention of the present application is calculated using the value of relative fluorescence intensity, in accordance with the following calculation formula.

Antioxidant activity = {(relative fluorescence intensity of non-addition control)/(relative fluorescence intensity of each sample)} $\times$ 100

The antioxidant activity is a value when that of the non-addition control) is taken as 100, and the larger the value, the higher the antioxidant activity.

(Water-soluble Koji-fermented Soybean Polysaccharide)

In the present invention, the term "water-soluble koji-fermented soybean polysaccharide" refers to a water-soluble polysaccharide obtained by the fermentation with microorganisms such as koji mold or with an enzyme (such as a pectinase, a pectin lyase, an arabinase, a galactanase or the like, produced by koji mold), of the above-described water-soluble fermented soybean polysaccharides. It is also possible to use one contained in soy sauce, one contained in a soy fermentation product during the production of soy sauce, or the like.

Examples of the koji mold include: yellow koji molds represented *by Aspergillus oryzae, Aspergillus sojae* and the like; black koji molds represented by *Aspergillus luchuensis* and the like; and variants thereof.

(Content of Water-soluble Fermented Soybean Polysaccharide)

The content of the water-soluble fermented soybean polysaccharide is, for example, 0.001% by mass or more and 1.0% by mass or less with respect to the entire amount of the acidic liquid seasoning. The lower limit value of the content of the water-soluble fermented soybean polysaccharide is preferably 0.005% by mass or more, more preferably 0.008% by mass or more, still more preferably 0.01% by mass or more, yet still more preferably 0.02% by mass or more, particularly preferably 0.03% by mass or more, and most preferably 0.04% by mass or more. The upper limit value thereof is preferably 0.9% by mass or less, more preferably 0.8% by mass or less, and still more preferably 0.7% by mass or less. These upper limit values and lower limit values of the content of the water-soluble fermented soybean polysaccharide can be combined arbitrarily. For example, the above-described content is preferably 0.005% by mass or more and 0.9% by mass or less, more preferably 0.008% by mass or more and 0.8% by mass or less, and still more preferably 0.01% by mass or more and 0.7% by mass or less. Further, the lower limit value of the content of the water-soluble fermented soybean polysaccharide, with respect to 100 parts by mass of the content of the edible fat or oil, is preferably 0.001 parts by mass or more, more preferably 0.005 parts by mass or more, still more preferably 0.01 parts by mass or more, yet still more preferably 0.015 parts by mass or more, particularly preferably 0.02 parts by mass or more, and most preferably 0.03 parts by mass or more. The upper limit value thereof is preferably 1.0 part by mass or less, more preferably 0.9 parts by mass or less, and still more preferably 0.8 parts by mass or less. These upper limit values and lower limit values of the content of the water-soluble fermented soybean polysaccharide, with respect to 100 parts by mass of the content of the edible fat or oil, can be combined arbitrarily. For example, the above-described content is preferably 0.001 parts by mass or more and 1.0 part by mass or less, more preferably 0.005 parts by mass or more and 0.9 parts by mass or less, and still more preferably 0.01 parts by mass or more and 0.8 parts by mass or less. When the content of the water-soluble fermented soybean polysaccharide in the acidic liquid seasoning is within the range described above, it is possible to reduce the generation of an oxidized odor derived from the fat or oil, and to mask the acidity derived from acetic acid, even after a long-term storage.

(Emulsifier)

The acidic liquid seasoning may further contain an emulsifier. The emulsifier is preferably at least one selected from the group consisting of egg yolk, a modified starch and a vegetable protein.

The egg yolk to be incorporated into the acidic liquid seasoning is not particularly limited, as long as the egg yolk is commonly used as an emulsifier. The egg yolk may be, for example, raw egg yolk obtained by cracking a chicken egg and separating the egg yolk from the egg white, one obtained by subjecting the raw egg yolk to one or more treatments, such as, for example: a sterilization treatment; a freezing treatment; a drying treatment such as spray drying or freeze drying; an enzyme treatment with phospholipase A1, phospholipase A2, phospholipase C, phospholipase D, a protease or the like; a decholesterolization treatment such as a supercritical carbon dioxide treatment; or a treatment to mix salt or a saccharide. These kinds of egg yolk may be used singly, or in combination of two or more kinds thereof.

The content of the egg yolk in terms of raw egg yolk is, for example, 0.5% by mass or more with respect to the entire amount of the acidic liquid seasoning. The lower limit value of the content of the egg yolk is preferably 1% by mass or more, more preferably 2% by mass or more, and still more preferably 3% by mass or more, and the upper limit value thereof is preferably 40% by mass or less, more preferably 30% by mass or less, still more preferably 20% by mass or less, and yet still more preferably 15% by mass or less. These upper limit values and lower limit values of the content of the egg yolk can be combined arbitrarily. For example, the content of the egg yolk is preferably 0.5% by mass or more and 40% by mass or less, more preferably 1% by mass or more and 40% by mass or less, still more preferably 2% by mass or more and 30% by mass or less, and yet still more preferably 3% by mass or more and 20% by mass or less. When the content of the egg yolk is within the range described above, and in cases where the acidic liquid seasoning is in an emulsified state, a stable emulsified state can be maintained even after storage, and the acidic liquid seasoning can be adjusted to have preferred physical properties.

The modified starch to be incorporated into the acidic liquid seasoning may be, for example, one obtained by subjecting potato starch, corn starch (such as corn starch derived from sweet corn, dent corn, or waxy corn), tapioca starch, sago starch, sweet potato starch, wheat starch, rice starch or the like, to a crosslinking treatment, an esterification treatment, an etherification treatment, an oxidation treatment or the like. These modified starches may be used singly, or in combination of two or more kinds thereof.

The content of the modified starch is, for example, 0.1% by mass or more and 5% by mass or less with respect to the entire amount of the acidic liquid seasoning. The lower limit value of the content of the modified starch is preferably 0.5% by mass or more, and more preferably 1% by mass or more, and the upper limit value thereof is preferably 4% by mass or less, and more preferably 3% by mass or less. These upper limit values and lower limit values of the content of the modified starch can be combined arbitrarily. For example, the content of the modified starch is preferably 0.5% by mass or more and 4% by mass or less, and more preferably 1% by mass or more and 3% by mass or less. When the content of the modified starch is within the range described above, and in cases where the acidic liquid seasoning is in an emulsified state, a stable emulsified state can be maintained even after storage, and the acidic liquid seasoning can be adjusted to have preferred physical properties.

The vegetable protein to be incorporated into the acidic liquid seasoning may be, for example a vegetable protein (one obtained from soybean or wheat as a raw material, and then subjected to a processing treatment to increase the protein content to 50% or more) as defined in the JAS Standards, or the like.

The content of the vegetable protein is, for example, 0.05% by mass or more and 5% by mass or less with respect to the entire amount of the acidic liquid seasoning. The lower limit value of the content of the vegetable protein is preferably 0.1% by mass or more, and more preferably 1% by mass or more, and the upper limit value thereof is preferably 4% by mass or less, and more preferably 3% by mass or less. These upper limit values and lower limit values of the content of the vegetable protein can be combined arbitrarily. For example, the content of the vegetable protein is preferably 0.1% by mass or more and 4% by mass or less, and more preferably 1% by mass or more and 3% by mass or less. When the content of the vegetable protein is within the range described above, and in cases where the acidic liquid seasoning is in an emulsified state, a stable emulsified state can be maintained even after storage, and the acidic liquid seasoning can be adjusted to have preferred physical properties.

(Thickener)

The acidic liquid seasoning may further contain a thickener, for the purpose of adjusting the viscosity. Examples of the thickener include xanthan gum, carrageenan, guar gum, tamarind seed gum, locust bean gum, gellan gum and gum arabic. Of these, xanthan gum is preferred.

The content of the thickener is, for example, 0.1% by mass or more and 5.0% by mass or less with respect to the entire amount of the acidic liquid seasoning. The lower limit value of the content of the thickener is preferably 0.2% by mass or more, and more preferably 0.3% by mass or more, and the upper limit value thereof is preferably 3.0% by mass or less, and more preferably 2.0% by mass or less. These upper limit values and lower limit values of the content of the thickener can be combined arbitrarily. For example, the content of the thickener is preferably 0.2% by mass or more and 3.0% by mass or less, and more preferably 0.3% by mass or more and 2.0% by mass or less. When the content of the thickener is within the range described above, and in cases where the acidic liquid seasoning is in an emulsified state, a stable emulsified state can be maintained even after storage, and the acidic liquid seasoning can be adjusted to have preferred physical properties.

(Salt)

The acidic liquid seasoning may further contain salt. The upper limit value of the content of the salt, with respect to the entire amount of the acidic liquid seasoning, is preferably 6.0% by mass or less, more preferably 5.0% by mass or less, still more preferably 4.5% by mass or less, yet still more preferably 4.0% by mass or less, and most preferably 3.5% by mass or less. The lower limit value thereof may be 0.1% by mass or more, 0.2% by mass or more, 0.5% by mass or more, or 1.0% by mass or more. These upper limit values and lower limit values of the content of the salt can be combined arbitrarily. For example, the content of the salt is preferably 0.1% by mass or more and 6.0% by mass or less, more preferably 0.2% by mass or more and 5.0% by mass or less, and still more preferably 0.5% by mass or more and 4.5% by mass or less. When the content of the salt is within the range described above, it is possible to improve preservability while maintaining the balance of flavors. The content of the salt in the present invention is not limited to the amount of the salt incorporated into the acidic liquid seasoning, and includes that derived from other raw materials.

(Soy Sauce)

In the acidic liquid seasoning, it is preferred to reduce the content of soy sauce, from the viewpoint of the ease of adjusting the flavor and the color. The upper limit value of the content of the soy sauce in the acidic liquid seasoning, with respect to the entire amount of the acidic liquid seasoning, is, for example, 20% by mass or less, 18% by mass or less, 15% by mass or less, 13% by mass or less, 10% by mass or less, 5% by mass or less, 1% by mass or less, 0.1% by mass or less or 0.01% by mass or less, and preferably 0% by mass (namely, no soy sauce is contained).

(Other Raw materials)

In addition to the raw materials described above, any of various kinds of raw materials usually used in liquid seasonings can be selected as appropriate, and incorporated into the acidic liquid seasoning, to the extent that the effects of the present invention are not impaired. Examples of other raw materials include: seasonings such as mirin, sesame, monosodium glutamate and bouillon; saccharides such as glucose, fructose, sucrose, maltose, oligosaccharide and trehalose; spices such as mustard powder and pepper; emulsifiers other than the modified starches, such as lecithin, lysolecithin, glycerin fatty acid esters, polyglycerin fatty acid esters and sucrose fatty acid esters; antioxidants such as ascorbic acid and vitamin E; and bacteriostatic agents.

<Method of Producing Acidic Liquid Seasoning>

One example of the method of producing the acidic liquid seasoning according to the present invention will be described. For example, aqueous phase raw materials such as pure water, vinegar (acetic acid), a thickener, a seasoning and the like are mixed first, to prepare an aqueous phase.

Subsequently, egg yolk is added to the aqueous phase prepared as described above, if necessary, and an edible fat or oil as an oil phase raw material is added thereto by pouring with stirring using a mixer or the like, to coarsely emulsify the resulting mixture.

Thereafter, the crude emulsion is homogenized using a processing machine having an excellent shear force, or the like, to emulsify and disperse the oil phase in the aqueous phase. In this manner, an acidic seasoning in the form of an emulsified liquid can be obtained. It is also possible to place an edible fat or oil on the aqueous phase prepared as described above, to obtain an acidic liquid seasoning in a separated state.

In the present invention, the water-soluble fermented soybean polysaccharide described above may be added during the production process of the acidic liquid seasoning, or alternatively, the water-soluble fermented soybean polysaccharide described above may be added after the production of the acidic liquid seasoning. In particular, it is preferred to use a water-soluble fermented soybean polysaccharide fractionated or separated from a food or a food raw material.

In the production of the acidic liquid seasoning, it is possible to use any apparatus usually used in the production of a liquid seasoning. Such an apparatus may be, for example, a common stirrer, a stick mixer, a stand mixer, a homomixer or the like. The stirring blade of the stirrer may be, for example, a propeller blade, a turbine blade, a paddle blade, an anchor blade or the like.

<Method of Preventing Oxidation of Acidic Liquid Seasoning>

The method of preventing the oxidation of an acidic liquid seasoning according to the present invention is characterized in that the method incudes adding the water-soluble fermented soybean polysaccharide described above to the acidic liquid seasoning. The method of adding the water-soluble fermented soybean polysaccharide is not particularly limited, and any conventionally known method can be used. Further, the water-soluble fermented soybean polysaccharide may be added during the production process of the acidic liquid seasoning, or after the production of the acidic liquid seasoning.

In a preferred embodiment, the method of preventing the oxidation according to the present invention can be effectively used for an acidic liquid seasoning in which the content of soy sauce is reduced (for example, to 20% by mass or less, 18% by mass or less, 15% by mass or less, 13% by mass or less, 10% by mass or less, 5% by mass or less, 1% by mass or less, 0.1% by mass or less, or 0.01% by mass or less), or for an acidic liquid seasoning that does not contain soy sauce.

In the present invention, the addition of the water-soluble fermented soybean polysaccharide described above to an acidic liquid seasoning may be either the addition of a polysaccharide fractionated or separated from a food or a food raw material as the water-soluble fermented soybean polysaccharide, or the addition of the food or food raw material itself that contains the water-soluble fermented soybean polysaccharide.

<Antioxidant for Acidic Liquid Seasoning>

The antioxidant for an acidic liquid seasoning according to the present invention is characterized by containing the water-soluble fermented soybean polysaccharide described above as an active ingredient. In other words, the water-soluble fermented soybean polysaccharide described above can be used as an antioxidant for an acidic liquid seasoning. The amount of the antioxidant to be added to the acidic liquid seasoning is not particularly limited. However, it is preferred to add the antioxidant, for example, such that the amount of the water-soluble fermented soybean polysaccharide is 0.001% by mass or more and 1.0% by mass or less with respect to the amount of the acidic liquid seasoning. Further, it is preferred to add the antioxidant such that the amount of the water-soluble fermented soybean polysaccharide is 0.001 parts by mass or more with respect to 100 parts by mass of the content of the edible fat or oil. When the added amount of the antioxidant is within the numerical range described above, it is possible to sufficiently reduce the generation of an oxidized odor derived from the fat or oil in the acidic liquid seasoning, even after a long-term storage.

In a preferred embodiment, the antioxidant for an acidic liquid seasoning according to the present invention can be effectively used for an acidic liquid seasoning in which the content of soy sauce is reduced (for example, to 20% by mass or less, 18% by mass or less, 15% by mass or less, 13% by mass or less, 10% by mass or less, 5% by mass or less, 1% by mass or less, 0.1% by mass or less, or 0.01% by mass or less), or for an acidic liquid seasoning that does not contain soy sauce.

<Method of Producing Antioxidant for Acidic Liquid Seasoning>

The method of producing the antioxidant for an acidic liquid seasoning according to the present invention includes the step of fractionating or separating a water-soluble fermented soybean polysaccharide from a food or a food raw material. Details of the antioxidant for an acidic liquid seasoning according to the present invention are as described above.

<Method of Reducing Acidity of Acidic Liquid Seasoning>

The method of reducing the acidity of an acidic liquid seasoning according to the present invention is characterized in that the method includes adding the water-soluble fermented soybean polysaccharide described above to the acidic liquid seasoning. The method of adding the water-soluble fermented soybean polysaccharide is not particularly limited, and any conventionally known method can be used. Further, the water-soluble fermented soybean polysaccharide may be added during the production process of the acidic liquid seasoning, or after the production of the acidic liquid seasoning.

In a preferred embodiment, the method of reducing the acidity according to the present invention can be effectively used for an acidic liquid seasoning in which the content of soy sauce is reduced (for example, to 20% by mass or less, 18% by mass or less, 15% by mass or less, 13% by mass or less, 10% by mass or less, 5% by mass or less, 1% by mass or less, 0.1% by mass or less, or 0.01% by mass or less), or for an acidic liquid seasoning that does not contain soy sauce.

In the present invention, the addition of the water-soluble fermented soybean polysaccharide described above to an acidic liquid seasoning may be either the addition of a polysaccharide fractionated or separated from a food or a food raw material as the water-soluble fermented soybean polysaccharide, or the addition of the food or food raw material itself that contains the water-soluble fermented soybean polysaccharide.

<Acidity Reducer for Acidic Liquid Seasoning>

The acidity reducer for an acidic liquid seasoning according to the present invention is characterized by containing the water-soluble fermented soybean polysaccharide described above as an active ingredient. In other words, the water-soluble fermented soybean polysaccharide described above can be used as an acidity reducer for an acidic liquid seasoning. The amount of the acidity reducer to be added to the acidic liquid seasoning is not particularly limited. However, it is preferred to add the acidity reducer, for example, such that the amount of the water-soluble fermented soybean polysaccharide is 0.001% by mass or more and 1.0% by mass or less with respect to the amount of the acidic liquid seasoning. When the added amount of the acidity reducer is within the numerical range described above, it is possible to sufficiently mask the acidity derived from the acetic acid in the acidic liquid seasoning.

In a preferred embodiment, the acidity reducer for an acidic liquid seasoning according to the present invention can be effectively used for an acidic liquid seasoning in which the content of soy sauce is reduced (for example, to 20% by mass or less, 18% by mass or less, 15% by mass or less, 13% by mass or less, 10% by mass or less, 5% by mass or less, 1% by mass or less, 0.1% by mass or less, or 0.01% by mass or less), or for an acidic liquid seasoning that does not contain soy sauce.

EXAMPLES

The present invention will be described below in further detail, with reference to Examples and Comparative Examples. However, the present invention is not construed as being limited to the contents of the following Examples.

<Test Example 1>

<Preparation of Water-soluble Soybean Polysaccharides>

· Water-soluble fermented soybean polysaccharide 1:

The water-soluble fermented soybean polysaccharide contained in a fraction having a molecular weight of $6 \times 10^3$ or more and $10 \times 10^4$ or less, obtained from Fermented Soy Polysaccharide Powder H (trade name) (manufactured by Higashimaru Shoyu Co., Ltd.), was defined as "water-soluble fermented soybean polysaccharide 1".

· Water-soluble fermented soybean polysaccharides 2 to 4:

A water-soluble polysaccharide fraction was obtained from a koji-fermented soybean product, using the dialysis method. Subsequently, the thus obtained fraction was fractionated according to the molecular weights (from $3 \times 10^3$ to $1 \times 10^4$, from $1 \times 10^4$ to $5 \times 10^4$ and from $5 \times 10^4$ to $10 \times 10^4$) using ultrafiltration membranes (Amicon Ultra-15 100 k (exclusion limit molecular weight: 100,000), Amicon Ultra-4 50 k (exclusion limit molecular weight: 50,000) and Amicon Ultra-4 10 k (exclusion limit molecular weight: 10,000), respectively (all of the above manufactured by MERCK KGaA). The respective fractions corresponding to the respective molecular weights were freeze dried, and defined as "water-soluble fermented soybean polysaccharides 2 to 4". Specifically, the operation was carried out in accordance with the method described in the technical literature (Norihiro Magishi, Doctoral Thesis, 2016 "Functional Expression and Soy Allergen Removal by Decomposition of Soybean in Soy Sauce Brewing").

· Water-soluble soybean polysaccharide 5:

A water-soluble soybean polysaccharide contained in SM-900 (trade name) (manufactured by San-Ei Gen F.F.I., Inc.) was used.

· Water-soluble soybean polysaccharide 6:

A water-soluble soybean polysaccharide contained in SM-1200 (trade name) (manufactured by San-Ei Gen F.F.I., Inc.) was used.

<Evaluation of Water-soluble Soybean Polysaccharides>

The following measurements i and ii were carried out for each of the water-soluble soybean polysaccharides 1 to 6 prepared as described above. The measured results are shown in Table 1. The amount of xylose in each of the water-soluble fermented soybean polysaccharides 1 to 4 was 10% by mass or more per constituent sugar. Further, the water-soluble fermented soybean polysaccharides 1 to 4 were water-soluble koji-fermented soybean polysaccharides.

(i. Measurement of Molecular Weight)

The molecular weight of each of the water-soluble soybean polysaccharides 5 and 6 was measured by high performance liquid chromatography (HPLC method) under the following conditions. Specifically, the molecular weight was calculated based on a calibration curve prepared using a standard sample ("Shodex STANDARD P-82", manufactured by SHOWA DENKO K.K.). Further, the molecular weight of each of the water-soluble soybean polysaccharides 2 to 4 was measured under the same conditions, to confirm that each polysaccharide has the fractionated molecular weight. The measured results are shown in Table 1. In addition, the molecular weight of the product itself of the above-described "Fermented Soy Polysaccharide Powder H (trade name) (manufactured by Higashimaru Shoyu Co., Ltd.)", and of the fractions obtained by fractionating the product using the same ultrafiltration membranes as those used for the water-soluble soybean polysaccharides 2 to 4, were measured under the same conditions, to confirm that a specific amount of the water-soluble soybean polysaccharide 1 was contained.

(HPLC Conditions)

· Columns: TSkgel guardcolumn PWXL, TSkgel 3000 PWXL, TSkgel 2500 PXWL (all of the above manufactured by Tosoh Corporation) were connected sequentially, and used.
· Eluent: 0.1 M phosphate buffer solution (pH: 6.8)
· Flow rate: 0.3 ml/min
· Detector: RI detector, Waters 2414 (manufactured by Waters Corporation)

(ii. Measurement of Antioxidant Activity)

The antioxidant activity of each of the water-soluble soybean polysaccharides 1 to 6, as evaluated by the model system for the oxidation of an acidic egg yolk solution, was measured by the following method. The measured results are shown in Table 1.

[Test Method]

(1) A quantity of 10 g of egg yolk is diluted with 130 g of distilled water, and then heated at 60°C for 3 minutes, to obtain a diluted egg yolk solution. To the resulting diluted egg yolk solution, glacial acetic acid is added to adjust the pH to 4.0, thereby preparing an acidic egg yolk solution (containing 1% egg yolk solid content). Subsequently, a dispersion liquid obtained by dispersing a sample for evaluating the antioxidant activity in distilled water is added to the acidic egg yolk solution, and the resulting mixture is used as a test solution. At this time, the sample concentration in the dispersion liquid and the added amount thereof are adjusted such that the amount of sample in the test solution is 100 times the content of Fe contained in the acidic egg yolk solution (see the following formula).

Formula: (amount of sample)/(Fe content in the acidic egg yolk solution) = 100 (w/w)

(2) A quantity of 10 mL of the test solution is introduced into a 15 mL test tube with a screw cap, lightly cap the test tube (in an air circulating state), and the test solution is incubated at 55°C for 65 hours in a dark place. A quantity of 200 $\mu$L of the incubated test solution is transferred into a test tube, 3 mL of an ether/ethanol (1:3, v/v) mixed solution is added thereto, and then stirred, followed by centrifugation at 1,200 × g for 5 minutes. The fluorescence intensity (Ex: 360 nm, Em: 440 nm) of the resulting supernatant is measured by a spectrophotometer.
(3) The value of relative fluorescence intensity, when the measured value of a solution obtained by diluting quinine sulfate with 0.1 N sulfuric acid to 1 $\mu$g/mL is taken as 100, is used as the fluorescence intensity. The antioxidant activity in the invention of the present application is calculated using the value of relative fluorescence intensity, in accordance with the following calculation formula.

Antioxidant activity = {(relative fluorescence intensity of non- addition control)/(relative fluorescence intensity of each sample)} $\times$ 100

The larger the value, the higher the antioxidant activity.

The antioxidant activity of the water-soluble fermented soybean polysaccharide 1 was determined, by preparing a calibration curve according to the amount of sample and the fluorescence intensity, for the "Fermented Soy Polysaccharide Powder H (trade name) (manufactured by Higashimaru Shoyu Co., Ltd.)", and then calculating the antioxidant activity based on the resulting calibration curve, and on the value in terms of the amount of the water-soluble fermented soybean polysaccharide 1 contained in the "Fermented Soy Polysaccharide Powder H (trade name) (manufactured by Higashimaru Shoyu Co., Ltd.)". The amount of the water-soluble fermented soybean polysaccharide 1 contained in the "Fermented Soy Polysaccharide Powder H (trade name) (manufactured by Higashimaru Shoyu Co., Ltd.)" was calculated based on the value obtained by measuring the fraction fractionated using an ultrafiltration membrane by the HPLC method.

[Table 1]

| | Water-soluble fermented soybean polysaccharide 1 | Water-soluble fermented soybean polysaccharide 2 | Water-soluble fermented soybean polysaccharide 3 | Water-soluble fermented soybean polysaccharide 4 | Water-soluble soybean polysaccharide 5 | Water-soluble soybean polysaccharide 6 |
|---|---|---|---|---|---|---|
| Molecular weight | $6 \times 10^3$ to $10 \times 10^4$ | $3 \times 10^3$ to $1 \times 10^4$ | $1 \times 10^4$ to $5 \times 10^4$ | $5 \times 10^4$ to $10 \times 10^4$ | $10 \times 10^4$ to $120 \times 10^4$ | $10 \times 10^4$ to $120 \times 10^4$ |
| Antioxidant activity | 181 | 341 | 223 | 202 | 99 | 90 |

**EP 4 710 774 A1**

<Test Example 2>

<Production of Acidic Liquid Seasonings (Mayonnaise-like Seasonings)>

[Examples 1 to 13 and 15 to 17, and Comparative Examples 1 to 5]

Acidic liquid seasonings were produced in accordance with the mixing ratios shown in Tables 2 to 4. Specifically, in each of Examples and Comparative Examples, an edible vegetable oil or fat (soybean oil), vinegar (acetic acid content: 4%), a water-soluble fermented soybean polysaccharide or a water-soluble soybean polysaccharide or EDTA·Ca2Na, salt, a spice(s), and if necessary, egg yolk, xanthan gum, a modified starch and/or the like, were mixed homogeneously, first, to prepare an aqueous phase. Thereafter, while stirring the thus prepared aqueous phase, the edible vegetable oil or fat (soybean oil) was added thereto by pouring, to emulsify the mixture, thereby producing a mayonnaise-like acidic liquid seasoning.

The water-soluble fermented soybean polysaccharide 1 was incorporated into each acidic liquid seasoning, by adding the "Fermented Soy Polysaccharide Powder H (trade name) (manufactured by Higashimaru Shoyu Co., Ltd.)" such that the water-soluble fermented soybean polysaccharide contained in a fraction having a molecular weight of $6 \times 10^3$ or more and $10 \times 10^4$ or less was contained in each amount shown in Table 2. The amount of the water-soluble fermented soybean polysaccharide 1 contained in the "Fermented Soy Polysaccharide Powder H (trade name) (manufactured by Higashimaru Shoyu Co., Ltd.)" was calculated based on the value obtained by measuring the fraction fractionated using an ultrafiltration membrane by the HPLC method.

[Example 14]

An aqueous phase was prepared in the same manner as in Example 1, in accordance with the mixing ratio shown in Table 2. Thereafter, the edible vegetable oil or fat was placed on the thus prepared aqueous phase, to produce an acidic liquid seasoning in a separated state.

The water-soluble fermented soybean polysaccharide 1 was incorporated in the same manner as described above.

<Evaluation of Acidic Liquid Seasoning>

(Measurement of pH)

The pH of each of the acidic liquid seasonings obtained as described above was measured using a pH meter (a desktop pH meter F-72, manufactured by HORIBA, Ltd.) at a pressure of 1 atm and a product temperature of 20°C. All of the acidic liquid seasonings had a pH of 2.5 or more and 4.3 or less.

(Measurement of Measurement of Viscosity)

The viscosity of each of the acidic liquid seasonings obtained as described above was measured using a Type BH viscometer, and using: Rotor No. 1 when the viscosity is less than 1,000 mPa·s, Rotor No. 2 when the viscosity is 1,000 mPa·s or more and less than 4,000 mPa·s, Rotor No. 3 when the viscosity is 4,000 mPa·s or more and less than 10,000 mPa·s, Rotor No. 4 when the viscosity is 10,000 mPa·s or more and less than 20,000 mPa·s, and Rotor No. 5 when the viscosity is 20,000 mPa·s or more and less than 40,000 mPa·s, under the conditions of a product temperature of 25°C and a rotational speed of 10 rpm; and using: Rotor No. 4 when the viscosity is 40 Pa·s or more and less than 100 Pa·s, Rotor No. 5 when the viscosity is 100 Pa·s or more and less than 200 Pa·s, Rotor No. 6 when the viscosity is 200 Pa·s or more and less than 500 Pa·s, and Rotor No. 7 when the viscosity is 500 Pa·s or more, under the conditions of a product temperature of 25°C and a rotational speed of 2 rpm. The viscosity was calculated from the reading when the rotor has rotated for one minute after the start of the measurement. The measured results are shown in Table 2 to 4. The viscosity of the acidic liquid seasoning of Example 14 was measured after sufficiently mixing the seasoning so that the aqueous phase and the oil phase form a homogeneous mixture.

(Sensory Evaluation)

The sensory evaluation on the effect of "preventing the fat or oil-derived oxidation (reducing oxidized odor)" and the effect of "masking acidity" was carried out for each of the acidic liquid seasonings obtained as described above, by a panel of multiple (four) trained panelists, in accordance with the following criteria. The acidic liquid seasonings immediately after the production were used for the evaluation on the effect of masking acidity, and the acidic liquid seasonings after being stored in a dark place at 25°C for 3 months were used for the evaluation on the effect of preventing the fat or oil-derived oxidation. The mean values of the evaluation results are shown in Tables 2 to 4. When the mean values of the evaluation results are equal to or higher than 2 points, the corresponding acidic liquid seasonings were evaluated as "Pass".

[Criteria for Evaluating Effect of Preventing Oxidation (reducing oxidized odor)]

Non-addition control: One in which the water-soluble fermented soybean polysaccharide or the water-soluble soybean polysaccharide or EDTA·Ca2Na is replaced with pure water.

5: A much better effect of preventing the fat or oil-derived oxidation (reducing oxidized odor) was perceived, as compared to the non-addition control.
4: A better effect of preventing the fat or oil-derived oxidation (reducing oxidized odor) was perceived, as compared to the non-addition control.
3: The effect of preventing the fat or oil-derived oxidation (reducing oxidized odor) was perceived, as compared to the non-addition control.
2: A slight effect of preventing the fat or oil-derived oxidation (reducing oxidized odor) was perceived, as compared to the non-addition control.
1: No effect of preventing the fat or oil-derived oxidation (reducing oxidized odor) was perceived, even when compared to the non-addition control.

[Criteria for Evaluating Effect of Masking Acidity]

Non-addition control: One in which the water-soluble fermented soybean polysaccharide or the water-soluble soybean polysaccharide or EDTA·Ca2Na is replaced with pure water.

5: A much better effect of masking acidity was perceived, as compared to the non-addition control.
4: A better effect of masking acidity was perceived, as compared to the non-addition control.
3: The effect of masking acidity was perceived, as compared to the non-addition control.
2: A slight effect of masking acidity was perceived, as compared to the non-addition control.
1: No effect of masking acidity was perceived, even when compared to the non-addition control.

[Table 2]

| Composition | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex.13 | Ex. 14 |
|---|---|---|---|---|---|---|---|---|---|---|---|---|---|---|
| Edible vegetable oil | 70 | 70 | 70 | 70 | 70 | 70 | 70 | 80 | 50 | 30 | 30 | 30 | 30 | 30 |
| Vinegar (acidity: 4%) | 20 | 20 | 20 | 20 | 20 | 20 | 20 | 10 | 30 | 50 | 50 | 50 | 60 | 50 |
| Salt | 1.5 | 1.5 | 1.5 | 1.5 | 1.5 | 1.5 | 1.5 | 1.6 | 1.7 | 3.4 | 3.4 | 3.4 | 2.5 | 3.44 |
| Spice(s) | 0.2 | 0.2 | 0.2 | 0.2 | 0.2 | 0.2 | 0.2 | 0.2 | 0.2 | 0.2 | 0.2 | 0.2 | 0.2 | 0.2 |
| Egg yolk | 5 | 5 | 5 | 5 | 5 | 5 | 9 | 6 | 0 | 4 | 4 | 4 | 5 | 0 |
| Xanthan gum | 0 | 0 | 0 | 0 | 0 | 0 | 0 | 0 | 0.5 | 0.5 | 0.5 | 0.5 | 0.5 | 0.2 |
| Modified starch | 0 | 0 | 0 | 0 | 0 | 0 | 0 | 0 | 2 | 0 | 0 | 0 | 0 | 0 |
| Water-soluble fermented soybean polysaccharide 1 | 0.005 | 0.013 | 0.052 | 0.131 | 0.26 | 0.52 | 0.013 | 0.013 | 0.013 | 0.005 | 0.013 | 0.131 | 0.131 | 0.013 |
| EDTA·Ca2Na | 0 | 0 | 0 | 0 | 0 | 0 | 0 | 0 | 0 | 0 | 0 | 0 | 0 | 0 |
| Pure water | Balance | Balance | Balance | Balance | Balance | Balance | Balance | Balance | Balance | Balance | Balance | Balance | Balance | Balance |
| Total (parts by mass) | 100 | 100 | 100 | 100 | 100 | 100 | 100 | 100 | 100 | 100 | 100 | 100 | 100 | 100 |
| Acetic acid content (% by mass) | 0.8 | 0.8 | 0.8 | 0.8 | 0.8 | 0.8 | 0.8 | 0.4 | 1.2 | 2 | 2 | 2 | 2.4 | 2 |
| Content (parts by mass) of water-soluble fermented soybean polysaccharide with respect to 100 parts by mass of content of edible fat or oil | 0.0075 | 0.019 | 0.075 | 0.19 | 0.37 | 0.75 | 0.019 | 0.016 | 0.026 | 0.017 | 0.044 | 0.44 | 0.44 | 0.044 |
| Viscosity (mPa·s) | 5200 | 5300 | 5200 | 5200 | 5200 | 3540 | 78000 | 245000 | 90000 | 27500 | 27000 | 27000 | 28000 | 70 |
| Prevention of oxidation | 3 | 3 | 5 | 5 | 5 | 5 | 3 | 3 | 5 | 3 | 4 | 5 | 5 | 4 |
| Masking of acidity | 3 | 3 | 5 | 5 | 5 | 5 | 3 | 5 | 5 | 2 | 3 | 4 | 2 | 4 |

EP 4 710 774 A1

[Table 3]

| Composition | Ex. 15 | Ex. 16 | Ex. 17 |
|---|---|---|---|
| Edible vegetable oil | 76 | 76 | 76 |
| Vinegar (acidity: 4%) | 9.35 | 9.35 | 9.35 |
| Salt | 1.3 | 1.3 | 1.3 |
| Spice(s) | 0 | 0 | 0 |
| Egg yolk | 9 | 9 | 9 |
| Xanthan gum | 0 | 0 | 0 |
| Modified starch | 0 | 0 | 0 |
| Water-soluble fermented soybean polysaccharide 2 | 0.05 | 0 | 0 |
| Water-soluble fermented soybean polysaccharide 3 | 0 | 0.05 | 0 |
| Water-soluble fermented soybean polysaccharide 4 | 0 | 0 | 0.05 |
| EDTA.Ca2Na | 0 | 0 | 0 |
| Pure water | Balance | Balance | Balance |
| Total (parts by mass) | 100 | 100 | 100 |
| Acetic acid content (% by mass) | 0.374 | 0.374 | 0.374 |
| Content (parts by mass) of water-soluble fermented soybean polysaccharide with respect to 100 parts by mass of content of edible fat or oil | 0.066 | 0.066 | 0.066 |
| Viscosity (mPa·s) | 225000 | 220000 | 215000 |
| Prevention of oxidation | 5 | 5 | 5 |
| Masking of acidity | 5 | 5 | 5 |

[Table 4]

| Composition | Co. Ex. 1 | Co. Ex. 2 | Co. Ex. 3 | Co. Ex. 4 | Co. Ex. 5 |
|---|---|---|---|---|---|
| Edible vegetable oil | 70 | 70 | 70 | 70 | 76 |
| Vinegar (acidity: 4%) | 20 | 20 | 20 | 20 | 9.35 |
| Salt | 1.5 | 1.5 | 1.5 | 1.5 | 1.3 |
| Spice(s) | 0.2 | 0.2 | 0.2 | 0.2 | 0 |
| Egg yolk | 5 | 5 | 5 | 5 | 9 |
| Xanthan gum | 0 | 0 | 0 | 0 | 0 |
| Modified starch | 0 | 0 | 0 | 0 | 0 |
| Water-soluble soybean polysaccharide 5 | 0 | 0.05 | 0 | 0 | 0 |
| Water-soluble soybean polysaccharide 6 | 0 | 0 | 0.05 | 0 | 0 |
| EDTA·Ca2Na | 0.01 | 0 | 0 | 0 | 0 |
| Pure water | Balance | Balance | Balance | Balance | Balance |
| Total (parts by mass) | 100 | 100 | 100 | 100 | 100 |
| Acetic acid content (% by mass) | 0.8 | 0.8 | 0.8 | 0.8 | 0.374 |
| Content (parts by mass) of water-soluble fermented soybean polysaccharide with respect to 100 parts by mass of content of edible fat or oil | 0 | 0 | 0 | 0 | 0 |
| Viscosity (mPa·s) | 3540 | 4400 | 4300 | 4000 | 220000 |
| Prevention of oxidation | 5 | 1 | 1 | 1 | 1 |

(continued)

| Composition | Co. Ex. 1 | Co. Ex. 2 | Co. Ex. 3 | Co. Ex. 4 | Co. Ex. 5 |
|---|---|---|---|---|---|
| Masking of acidity | 1 | 1 | 1 | 1 | 1 |

As shown in Tables 2 and 3, the generation of an oxidized odor derived from the fat or oil after a long-term storage was reduced and the acidity derived from acetic acid was masked, in all of the acidic liquid seasonings of Examples 1 to 17. However, a marked browning after the storage was observed, in the acidic liquid seasonings produced in Examples 5 and 6. Further, a strong soybean odor derived from the water-soluble fermented soybean polysaccharide 1 was perceived after the storage, in the acidic liquid seasoning produced in Example 6.

In contrast, as shown in Table 4, the acidity derived from acetic acid was not masked in the acidic liquid seasoning of Comparative Example 1, although the generation of an oxidized odor derived from the fat or oil after a long-term storage was reduced. Further, in all of the acidic liquid seasonings of Comparative Examples 2 to 5, the oxidized odor derived from the fat or oil generated after a long-term storage, and the acidity derived from acetic acid was not masked.

**Claims**

1. An acidic liquid seasoning comprising at least acetic acid, an edible fat or oil and water,

   wherein the content of the edible fat or oil is 10% by mass or more and 90% by mass or less with respect to the entire amount of the acidic liquid seasoning,
   wherein the content of the acetic acid is 0.1% by mass or more and 5.0% by mass or less with respect to the entire amount of the acidic liquid seasoning, and
   wherein the acidic liquid seasoning further comprises a water-soluble fermented soybean polysaccharide having a molecular weight of $3 \times 10^3$ or more and $10 \times 10^4$ or less.

2. The acidic liquid seasoning according to claim 1, wherein the content of the water-soluble fermented soybean polysaccharide is 0.001 parts by mass or more with respect to 100 parts by mass of the content of the edible fat or oil.

3. The acidic liquid seasoning according to claim 1 or 2, wherein the content of the water-soluble fermented soybean polysaccharide is 0.001% by mass or more and 1.0% by mass or less with respect to the entire amount of the acidic liquid seasoning.

4. The acidic liquid seasoning according to any one of claims 1 to 3, wherein the water-soluble fermented soybean polysaccharide is a water-soluble koji-fermented soybean polysaccharide.

5. The acidic liquid seasoning according to any one of claims 1 to 4, wherein the content of soy sauce in the acidic liquid seasoning is 20% by mass or less with respect to the entire amount of the acidic liquid seasoning.

6. The acidic liquid seasoning according to any one of claims 1 to 4, wherein the content of soy sauce in the acidic liquid seasoning is 1.0% by mass or less with respect to the entire amount of the acidic liquid seasoning.

7. The acidic liquid seasoning according to any one of claims 1 to 4, wherein the acidic liquid seasoning does not contain soy sauce.

8. The acidic liquid seasoning according to any one of claims 1 to 7, wherein the antioxidant activity of the water-soluble fermented soybean polysaccharide, as evaluated by a test method based on a model system for the oxidation of an acidic egg yolk solution, which is defined in the present specification, is 110 or more with respect to that of a non-addition control taken as 100.

9. The acidic liquid seasoning according to any one of claims 1 to 8, further comprising an emulsifier which is at least one selected from the group consisting of egg yolk, a modified starch and a vegetable protein, and/or a thickener.

10. The acidic liquid seasoning according to claim 9, wherein the content of the egg yolk in terms of raw egg yolk is 0.5% by mass or more with respect to the entire amount of the acidic liquid seasoning.

11. The acidic liquid seasoning according to any one of claims 1 to 10, wherein the acidic liquid seasoning has a pH of 2.0 or more and 4.5 or less.

12. The acidic liquid seasoning according to any one of claims 1 to 11, wherein the acidic liquid seasoning is a mayonnaise-like seasoning.

13. A food comprising the acidic liquid seasoning according to any one of claims 1 to 12.

14. A method of preventing the oxidation of an acidic liquid seasoning, the method comprising adding a water-soluble fermented soybean polysaccharide having a molecular weight of $3 \times 10^3$ or more and $10 \times 10^4$ or less, to the acidic liquid seasoning.

15. The method of preventing the oxidation of an acidic liquid seasoning according to claim 14, wherein the water-soluble fermented soybean polysaccharide is a water-soluble koji-fermented soybean polysaccharide.

16. The method of preventing the oxidation of an acidic liquid seasoning according to claim 14 or 15, wherein the content of soy sauce in the acidic liquid seasoning is 20% by mass or less with respect to the entire amount of the acidic liquid seasoning.

17. The method of preventing the oxidation of an acidic liquid seasoning according to claim 14 or 15, wherein the content of soy sauce in the acidic liquid seasoning is 1.0% by mass or less with respect to the entire amount of the acidic liquid seasoning.

18. The method of preventing the oxidation of an acidic liquid seasoning according to claim 14 or 15, wherein the acidic liquid seasoning does not contain soy sauce.

19. The method of preventing the oxidation of an acidic liquid seasoning according to any one of claims 14 to 18, wherein the method comprises using a water-soluble fermented soybean polysaccharide fractionated or separated from a food or a food raw material.

20. An antioxidant for an acidic liquid seasoning, comprising a water-soluble fermented soybean polysaccharide having a molecular weight of $3 \times 10^3$ or more and $10 \times 10^4$ or less, as an active ingredient.

21. The antioxidant for an acidic liquid seasoning according to claim 20, wherein the water-soluble fermented soybean polysaccharide is a water-soluble koji-fermented soybean polysaccharide.

22. A method of producing an antioxidant for an acidic liquid seasoning,

the method comprising the step of fractionating or separating a water-soluble fermented soybean polysaccharide from a food or a food raw material,
wherein the antioxidant for an acidic liquid seasoning comprises a water-soluble fermented soybean polysaccharide having a molecular weight of $3 \times 10^3$ or more and $10 \times 10^4$ or less, as an active ingredient.

23. A method of reducing the acidity of an acidic liquid seasoning, the method comprising adding a water-soluble fermented soybean polysaccharide having a molecular weight of $3 \times 10^3$ or more and $10 \times 10^4$ or less, to the acidic liquid seasoning.

24. An acidity reducer for an acidic liquid seasoning, comprising a water-soluble fermented soybean polysaccharide having a molecular weight of $3 \times 10^3$ or more and $10 \times 10^4$ or less, as an active ingredient.

25. A method of producing an acidic liquid seasoning comprising at least acetic acid, an edible fat or oil and water,

wherein the method comprises:

using a water-soluble fermented soybean polysaccharide fractionated or separated from a food or a food raw material, and
adding a water-soluble fermented soybean polysaccharide having a molecular weight of $3 \times 10^3$ or more and $10 \times 10^4$ or less, to the acidic liquid seasoning, and

wherein the content of the edible fat or oil is 10% by mass or more and 90% by mass or less with respect to the entire amount of the acidic liquid seasoning, and

wherein the content of the acetic acid is 0.1% by mass or more and 5.0% by mass or less with respect to the entire amount of the acidic liquid seasoning.

26. The method of producing the acidic liquid seasoning, according to claim 25, wherein the content of the water-soluble fermented soybean polysaccharide is 0.001 parts by mass or more with respect to 100 parts by mass of the content of the edible fat or oil.

27. The method of producing the acidic liquid seasoning, according to claim 25 or 26, wherein the content of the water-soluble fermented soybean polysaccharide is 0.001% by mass or more and 1.0% by mass or less with respect to the entire amount of the acidic liquid seasoning.

28. The method of producing the acidic liquid seasoning, according to any one of claims 25 to 27, wherein the water-soluble fermented soybean polysaccharide is a water-soluble koji-fermented soybean polysaccharide.

## INTERNATIONAL SEARCH REPORT

| International application No. |
|---|
| **PCT/JP2024/017277** |

**A. CLASSIFICATION OF SUBJECT MATTER**

*A23L 27/60*(2016.01)i; *A23L 27/00*(2016.01)i
FI:　A23L27/60 A; A23L27/00 D; A23L27/00 Z

According to International Patent Classification (IPC) or to both national classification and IPC

**B. FIELDS SEARCHED**

Minimum documentation searched (classification system followed by classification symbols)

A23L27/60; A23L27/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 57-33570 A (YAMANAGA SHOJI KK) 23 February 1982 (1982-02-23) | 1-13 |
| | claims, p. 2, upper left column, lines 1-9, examples | |
| Y | | 1-18, 20-21 |
| A | | 19, 22-28 |
| X | JP 2011-19423 A (FUJI SANGYO CO., LTD.) 03 February 2011 (2011-02-03) | 1-13 |
| | examples 4, 5 | |
| Y | | 1-18, 20-21 |
| A | | 19, 22-28 |
| X | JP 8-218 A (KEWPIE CORPORATION) 09 January 1996 (1996-01-09) | 1-5, 8-13 |
| | example 1 | |
| Y | | 1-5, 8-16, 20-21 |
| A | | 6-7, 17-19, 22-28 |

[✓] Further documents are listed in the continuation of Box C. 　 [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2024/017277** |

**C. DOCUMENTS CONSIDERED TO BE RELEVANT**

| Category* | Citation of document, with indication, where appropriate, of the relevant passages | Relevant to claim No. |
|---|---|---|
| Y | JP 2011-178730 A (HIGASHIMARU SHOYU CO., LTD.) 15 September 2011 (2011-09-15) paragraph [0024] | 1-18, 20-21 |
| Y | JP 2012-36100 A (HIGASHIMARU SHOYU CO., LTD.) 23 February 2012 (2012-02-23) paragraph [0025] | 1-18, 20-21 |
| Y | 今村美穂ほか. 旨味の後味を抑制するしょうゆ中の水溶性多糖. 日本醸造協会誌. 2015, vol. 110, no. 5, pp. 318-326, (IMAMURA, Miho, MATSUSHIMA, Kenichiro. Water Soluble Polysaccharide in Soy Sauce Suppresses Umami Aftertaste. Journal of the Brewing Society of Japan.) p. 319, table 2 | 1-18, 20-21 |
| Y | JP 2015-43749 A (KIKKOMAN CORPORATION) 12 March 2015 (2015-03-12) paragraph [0021] | 1-18, 20-21 |
| Y | 古林万木夫. 醤油の機能性に関する研究. 生物工学会誌. vol. 86, no. 2, 2008, pp. 65-72, (KOBAYASHI, Makio. Functional Research and Development of Soy Sauce), non-official translation (Journal of Bioengineering [Seibutsu-kogaku Kaishi].) p. 67, last paragraph | 1-18, 20-21 |
| Y | JP 2021-145602 A (NISSHIN OILLIO GROUP LTD.) 27 September 2021 (2021-09-27) paragraph [0003] | 14-18, 20-21 |
| Y | 大下克典. 醤油の機能性について. 日本醸造協会誌. 1990, vol. 85, no. 11, pp. 762-770, (OHSHITA, Katsunori. On the Physiological Functions of Soy Sauce. Journal of the Brewing Society of Japan.) p. 766 | 14-18, 20-21 |
| Y | LI, Shuhong et al. Polysaccharides production from soybean curd residue via Morchella esculenta. Journal of Food Biochemistry. 2019, vol. 43, e12791, pp. 1-12 abstract | 14-18, 20-21 |
| Y | TIAN, Juanjuan et al. Structural Characterization and Antioxidant Activity of Exopolysaccharide from Soybean Whey Fermented by Lacticaseibacillus plantarum 70810. Foods. 2021, vol. 10, 2780, pp. 1-12 abstract | 14-18, 20-21 |

Form PCT/ISA/210 (second sheet) (July 2022)

**INTERNATIONAL SEARCH REPORT**
Information on patent family members

International application No.

**PCT/JP2024/017277**

| Patent document cited in search report | | | Publication date (day/month/year) | Patent family member(s) | Publication date (day/month/year) |
|---|---|---|---|---|---|
| JP | 57-33570 | A | 23 February 1982 | (Family: none) | |
| JP | 2011-19423 | A | 03 February 2011 | (Family: none) | |
| JP | 8-218 | A | 09 January 1996 | (Family: none) | |
| JP | 2011-178730 | A | 15 September 2011 | (Family: none) | |
| JP | 2012-36100 | A | 23 February 2012 | (Family: none) | |
| JP | 2015-43749 | A | 12 March 2015 | (Family: none) | |
| JP | 2021-145602 | A | 27 September 2021 | (Family: none) | |

Form PCT/ISA/210 (patent family annex) (July 2022)

# EP 4 710 774 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006187277 A

### Non-patent literature cited in the description

- **H. KOBAYASHI et al.** Egg white hydrolysate inhibits oxidation in mayonnaise and a model system. *Bioscience, Biotechnology, and Biochemistry*, 2017, vol. 81 (6), 1206-1215

- **NORIHIRO MAGISHI**. Functional Expression and Soy Allergen Removal by Decomposition of Soybean in Soy Sauce Brewing. Doctoral Thesis, 2016